# EUROPÄISCHE PATENTSCHRIFT

(11) **EP 1 966 658 B1**
(45) Veröffentlichungstag und Bekanntmachung des Hinweises auf die Patenterteilung: **21.11.2012**
(21) Anmeldenummer: 06830710.7
(22) Anmeldetag: 19.12.2006
(51) Int. Cl.: G05B 19/418

(54) **VERFAHREN ZUR ANLAGENÜBERWACHUNG MIT EINEM FELDBUS DER PROZESSAUTOMATISIERUNGSTECHNIK**
METHOD FOR MONITORING INSTALLATIONS BY MEANS OF A FIELD BUS USED IN PROCESS AUTOMATION TECHNOLOGY
PROCEDE DE SURVEILLANCE D'INSTALLATIONS A L'AIDE D'UN BUS DE TERRAIN DE LA TECHNOLOGIE AUTOMATISATION DE PROCESSUS

(30) Priorität: 29.12.2005 DE 102005063053
(43) Veröffentlichungstag der Anmeldung: 10.09.2008
(73) Patentinhaber: Endress + Hauser Process Solutions AG, 4153 Reinach (CH)
(72) Erfinder: HÄHNICHE, Jörg, 79183 Bad Krozingen (DE); RÖMER, Matthias, 4148 Pfeffingen (CH)
(74) Vertreter: Andres, Angelika Maria
(86) Internationale Anmeldenummer: PCT/EP2006/069885
(87) Internationale Veröffentlichungsnummer: WO 2007/074105

(56) Entgegenhaltungen:
- EP-A1- 1 381 139
- DE-A1- 19 860 358
- DE-A1- 19 904 893
- DE-A1- 19 909 091
- DE-A1- 19 913 279
- DE-U1- 29 923 430

## Beschreibung

Die Erfindung betrifft ein Verfahren zur Anlagenüberwachung mit einem Feldbus der Prozessautomatisierungstechnik gemäß dem Oberbegriff des Anspruchs 1.

In der Automatisierungstechnik werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Zur Beeinflussung von Prozessvariablen dienen Aktoren, die z. B. als Ventile den Durchfluss einer Flüssigkeit in einem Rohrleitungsabschnitt oder als Pumpen den Füllstand in einem Behälter beeinflussen.

Eine Vielzahl solcher Feldgeräte wird von der Fa. Endress + Hauser hergestellt und vertrieben.

In der Regel sind Feldgeräte in modernen Fabrikationsanlagen über Kommunikationssysteme (HART, Profibus, Foundation Fieldbus, etc.) mit übergeordneten Einheiten (z. B. Leitsysteme, Steuereinheiten) verbunden. Diese übergeordneten Einheiten dienen unter anderem zur Prozesssteuerung, Prozessvisualisierung, Prozessüberwachung sowie zur Inbetriebnahme und zum Bedienen der Feldgeräte.

Als Feldgeräte werden allgemein auch solche Einheiten bezeichnet, die direkt an einen Feldbus angeschlossen sind und zur Kommunikation mit den übergeordneten Einheiten dienen (z. B. Remote I/Os, Gateways, Linking Devices).

Zum Teil sind Feldbussysteme in Unternehmensnetzwerke, die auf Ethernetbasis arbeiten, integriert. Damit kann aus unterschiedlichen Bereichen eines Unternehmens auf Prozess- bzw. Feldgerätedaten zugegriffen werden.

Zur weltweiten Kommunikation können die Firmennetzwerke auch mit öffentlichen Netzwerken, z. B. dem Internet verbunden sein.

Zum Bedienen der Feldgeräte sind entsprechende Bedienprogramme notwendig. Diese Bedienprogramme können in den übergeordneten Einheiten eigenständig ablaufen (z. B. FieldCare, Endress+Hauser; Pactware; AMS, Emerson; Simatic PDM, Siemens) oder aber auch in Leitsystem-Anwendungen (z. B. Simatic PCS7, Siemens; ABB Symphony; Delta V, Emerson) integriert sein. Neben Leitsystem-Anwendungen weisen teilweise auch Bedienprogramme bereits Funktionalitäten im Hinblick auf Anlagenüberwachung (Asset Management) auf.

An Feldbussysteme werden vom Anwender prinzipiell zwei völlig unterschiedliche Anforderungen gestellt; zum einen die Prozesssteuerung und zum anderen die Anlagenüberwachung bzw. die Anlagenvisualisiemng.

Beim Feldbussystem PROFIBUS® erfolgt die Prozesssteuerung über den zyklischen Datentransfer. Hierbei tauschen Feldgeräte in regelmäßigen Abständen Messwerte mit einer Prozesssteuereinheit (Controller) aus, die die entsprechenden Steuerbefehle z. B. für die entsprechenden Aktoren generiert. Die Kommunikation zwischen Prozesssteuereinheit und Feldgerät erfolgt bei PROFIBUS bekanntermaßen nach dem Master-Slave-Prinzip, wobei die Prozesssteuereinheit als Master und die Feldgeräte als Slaves fungieren. Die Buszugriffskontrolle geschieht über den Master, der über ein Aufruftelegramm Steuerbefehle an einzelne Feldgeräte sendet. Das Feldgerät darf nur dann Messwerte an den Master in einem Antworttelegramm übertragen, wenn es zuvor ein Aufruftelegramm erhalten hat. Die Sequenz aus Aufruf - und Antworttelegramm führt der Master zeitlich nacheinander mit jedem der ihm zugeordneten Slaves aus. Die Zeit bis auf diese Weise jeder dem Master zugeordnete Slave abgearbeitet worden ist, wird als Zykluszeit bezeichnet. Nach jedem Ende eines Zyklus beginnt der Master mit einem neuen Zyklus. Prozesssteuerungssysteme sind mikroprozessorbasierte Automatisierungsgeräte, deren Steuerungsfunktionalität durch eine Automatisierungssoftware, die im Zuge eines Engineeringvorgangs vom Automatisierungspersonal erstellt wird, beschrieben ist und im Automatisierungsgerät in Echtzeit ausgeführt wird.

Programme oder Teilprogramme mit Funktionalitäten im Hinblick auf Anlagenüberwachung werden im Folgenden als Asset-Management- Systeme bezeichnet. Diese dienen zur Verarbeitung von Geräteinformationen für die Überwachung und Optimierung des Geräte- und Anlagenzustands. Die Kommunikation von Daten zu Asset-Management Zwecken erfolgt in der Regel im azyklischen Datenverkehr, für den zwischen zwei aufeinander folgenden Zyklen ein gewisses Zeitintervall zur Verfügung steht. Die Aktualisierung von Daten zu Zwecken des Asset-Management erfolgt verglichen mit dem zyklischen Datenverkehr, in dem eine Aktualisierung nach jeder Zykluszeit erfolgt, deutlich langsamer.

Visualisiuerungssysteme stellen die aktuellen Größen des Prozess auf einer Bedienoberfläche dar Häufig werden zur Visualisierung neben den Zahlenwerten einer Prozessvariablen und ihrer Dimension auch sich veränderte graphische Symbole wie Zeiger, Balken oder Trenddarstellungen verwendet. Visualisierungssysteme beziehen die Daten meist von Prozesssteuerungssystemen. Das Visualisierungssystem ist im Sinne einer Bedienoberfläche auch in der Lage, bestimmte Größen im Steuerungssystem zu beeinflussen, was wiederum einen Einfluss auf den Ablauf des Steuerungsprogramms oder den Prozess selbst haben kann.

Da die Aufgaben der Prozesssteuerung vorrangig sind, ist das Zeitintervall das für den azyklischen Datenverkehr zur Verfügung steht, deutlich kürzer als das Zeitintervall für den zyklischen Verkehr.

Bei Diagnosedaten unterscheidet man zwischen ereignisabhängigen Diagnosedaten und Diagnosedaten, die nur auf Anforderung z. B. von einem Asset-Management-System ausgelesen werden. Beim Feldbussystem PROFIBUS sind ereignisabhängige Diagnosedaten an den Kommunikationspartner gebunden, der mit den ihm zugeordneten Slavegeräten zyklisch kommuniziert (PROFIBUS Master Class 1).

Damit ist sichergestellt, dass eine Prozesssteuereinheit, die mit Slavegeräten im zyklischen Datenaustausch steht, auf Diagnoseergebnisse zeitnah reagiert. Ein mit einer Leitsystem-Anwendung verbundenes Asset-Management-System kann von dieser Anwendung zum Holen von azyklischen Diagnosedaten initiiert werden. Damit werden die Vorteile der ereignisabhängigen Diagnose (kurze Reaktionszeit) mit dem Wunsch nach detaillierten Informationen (zusätzliche Diagnosedaten, die azyklisch kommuniziert werden) verbunden. Während die anstelle der Nutzdaten kommunizierten Diagnosedaten boolescher Natur sind (jedem Bit entspricht ein Diagnosedatum, das durch das Gerät identifiziert werden kann), kann es sich bei den azyklisch übertragenen diagnoserelevanten Daten z. B. um den Abnutzungsgrad einer Sonde oder den Verschmutzungsgrad der Messeinrichtung handeln.

Zur Kombination von Prozesssteuerung und Asset-Management-System sind proprietäre Lösungen bekannt (zum Beispiel SIMATIC PCS7, Fa. Siemens).

Ein Asset-Management-System, das von der Prozesssteuerung unabhängig ist, kann Diagnosedaten nur im azyklischene Datenverkehr anfordern. Da in diesem Fall das Asset-Management-System von einer Prozesssteuerung über Diagnoseereignisse nicht informiert wird, müssen regelmäßig Diagnosedaten angefordert werden, damit Diagnoseereignisse überhaupt vom Asset-Management-System festgestellt werden können.

Insbesondere bei Anlagen mit mehreren installierten Feldgeräten und einer Vielzahl diagnoserelevante Parameter die überwacht werden müssen, führt dies dazu, dass die Aktualisierung dieser Parameter im Asset-Management-System sehr lange dauert und daraus lange Reaktionszeiten resultieren. Diese langen Reaktionzeiten sind insbesondere bei kritischen Diagnoseereignissen sehr nachteilig, teilweise können sie sogar die Funktionsfähigkeit des Asset Management Systems beeinträchtigen.

Als Diagnoseereignis werden nicht nur Diagnosemeldungen von Feldgeräten sondern auch Alarmmeldungen verstanden.

Aufgabe der Erfindung ist es, ein Verfahren zur Anlagenüberwachung mit einem Feldbus der Prozessautomatisierungstechnik anzugeben, das die oben genannten Nachteile nicht aufweist, das ein möglichst hohes Maß von Unabhängigkeit von der Prozesssteuerung aufweist und trotzdem auf Diagnoseereignisse möglichst rasch reagiert.

Gelöst wird diese Aufgabe durch die im Anspruch 1 angegebenen Merkmale.

Vorteilhafte Weiterentwicklungen sind in den Unteransprüchen angegeben.

Nachfolgend ist die Erfindung anhand eines in der Zeichnung dargestellten Ausführungsbeispiels näher erläutert.

Es zeigen:

Fig. 1 Netzwerk der Prozessautomatisierungstechnik.

Fig. 2 zeitliche Abfolge einer Master-Slave Kommunikation

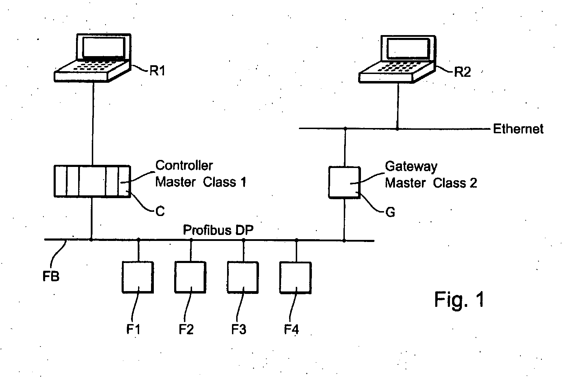

In Fig. 1 ist ein Netzwerk der Prozessautomatisierungstechnik näher dargestellt. An einen Feldbus FB sind mehrere Feldgeräte F1, F2, F3 und F4 angeschlossen. Weiterhin sind mit dem Feldbus FB ein Controller C (zum Beispiel FieldController Fa. Endress+Hauser) sowie ein Gateway G (zum Beispiel FieldGate Fa. Endress+Hauser) angeschlossen. Der Controller C ist mit einer Rechnereinheit R 1 verbunden, die als Visualisierungssystem dient. Das Gateway G ist mit einer Rechnereinheit R2 verbunden, die zum Beobachten von Feldgeräten dient.

Die Feldgeräte F 1 bis F4 sind als Slaves konfiguriert. Der Controller C ist als Master Class 1 und das Gateway G als Master Class 2 konfiguriert. Als Prozesssteuereinheit dient der Controller C, der zyklisch Ausgangsdaten an die einzelnen Feldgeräten sendet und Eingangsdaten von diesen erhält.

Als Anlagenüberwachungseinheit dient das Gateway G, das azyklisch mit den Feldgeräten kommuniziert.

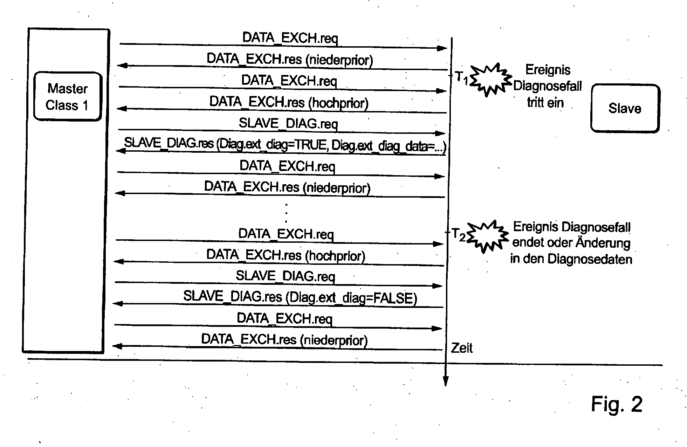

In Fig. 2 ist die zeitliche Abfolge der Kommunikation zwischen dem Controller C (Master) und dem Feldgerät F1 (Slave) schematisch dargestellt.

Der Master sendet normalerweise im zyklischen Datenverkehr ein Aufruftelegramm(request) an den Slave, der Slave antwortet mit eine Antworttelegramm (response) mit niedriger Priorität (Data_Exch).

Die Priorität wird im Profibustelegramm im Frame Control Byte angezeigt.

Bei einem Diagnoseereignis im Slave wird die Priorität des Antworttelegramms von niedrig "low" auf hoch "high" geändert. Sobald eine Antwort mit hoher Priorität vom Feldgerät gesendet wird, wird im anschließenden Datenverkehr vom Master anstatt eines Data_Exchange requests ein Slave_Diag request ausgelöst, so dass der Master anstelle der Prozessdaten nun Diagnosedaten vom Slave anfordert.

Zum Zeitpunkt T1 tritt ein solches Diagnoseereignis "(Diagnosefall)" ein. Auf die request des Masters antwortet der Slave mit einer response mit Priorität "high".

Aufgrund dieser Information, die auf ein Diagnoseereignis im Feldgerät hinweist, sendet der Master eine request (Slave_Diag) und der Slave antwortet mit einer response (Slave_Diag). Diese response beinhaltet spezielle Diagnosedaten des Slaves.

Anschließend wird der zyklische Datenverkehr wieder aufgenommen. Zum Zeitpunkt T2 tritt das Diagnoseereignis "Diagnosefall beendet" oder "Änderung von Diagnosedaten" auf. Damit die aktuellen Diagnosedaten an den Master übertragen werden können, sendet der Slave erneuert eine response mit hoher Priorität, was den Master wiederum zum Senden eines request (Slave_Diag) veranlasst, worauf der Slave mit einer response (Slave_Diag) antwortet.

Nur ein in den Master integriertes Asset Management System kann auf diese im Master vorhandenen Diagnosedaten zu greifen bzw. veranlassen, dass der Master azyklische Datenzugriffe tätigt, um zusätzliche Diagnosedaten vom Feldgerät zu erhalten. Diese Zugriffe werden dann über read requests durchgeführt.

Ein vom Leitsystem unabhängiges Asset Management System, das im vorliegenden Fall im Gateway G integriert ist, kann Diagnosedaten jedoch nur erhalten, wenn es in Abhängigkeit des Auftretens eines Diagnoseereignisses als Master Class 2 die Berechtigung zum Senden erhält, um so über die azyklische Kommunikation diagnoserelevante Daten zu erhalten.

Nachfolgend ist das erfindungsgemäße Verfahren näher erläutert. Das Gateway G hört als Anlagenüberwachungseinheit den regelmäßigen Datenverkehr auf dem Feldbus FB ab. Dieser regelmäßige (zyklische) Datenverkehr dient im Wesentlichen zur Prozesssteuerung.

Im Gateway G erfolgt eine Prüfung dieses Datenverkehrs auf Informationen, die auf das Eintreten eines Diagnoseereignisses bei einem der Feldgeräte hinweisen. Ein Diagnoseereignis kann z. B. eine Fehlfunktion des Feldgerätes an sich oder aber auch die Messung einer zu hohen Umgebungstemperatur (Alarm) sein. Dabei werden die einzelnen Telegramme des regelmäßigen Datenverkehrs dahingehend analysiert, ob ein Antworttelegramm eines Slaves mit hoher Priorität übertragen wird.

Falls ein Telegramm eines Slaves mit einem Hinweis auf eine Diagnoseereignisses festgestellt wird, fordert das Gateway G weitere Diagnoseinformationen von dem betreffenden Feldgerät an.

Der wesentliche Vorteil, den das erfindungsgemäße Verfahren bietet, besteht darin, dass das im Gateway G vorgesehenen Asset-Management-System nicht regelmäßig jedes einzelne Feldgeräte nach Diagnoseinformationen abfragen muss (azyklischer Verkehr), sondern nur wenn ein konkreter Hinweise auf eine Störung vorliegt.

Dadurch kann auch eine von einer Prozesssteuerung unabhängiges Asset-Management-System Diagnosefälle schnell und zuverlässig erkennen und entsprechende Maßnahmen einleiten. Eine Möglichkeit besteht darin, das Diagnoseereignis für den Anwender darzustellen oder in eine Datenbank mit einem entsprechenden Zeitstempel einzutragen. Es können auch E-Mails oder Kurznachrichten SMS vom Asset-Management-System an verantwortliche Personen mit entsprechenden Informationen zu dem Diagnoseereignis verschickt werden.

Die Erfindung kann sowohl bei dem Feldbussystem Profibus wie auch Foundation Fieldbus eingesetzt werden. Zur Anpassung der Figur 1 an das Feldbussystem Foundation Fieldbus sind die Bezeichnungen Master Class 1 und Master Class 2 zu streichen sowie die Bezeichnung Profibus DP durch Foundation Fieldbus zu ersetzen.

Die Erfindung soll sich nicht nur auf das Erkennen von konkreten Diagnoseereignissen beziehen, sondern auf das Erkennen der aktuellen zyklisch zum betreffenden Master übertragenen Prozessdaten eines bestimmten oder aller angeschlossenen Slaves, ohne dass der Busverkehr beeinträchtigt wird. Die Prozessdaten eines Slaves werden nun - ohne dass dazu die Anlagenüberwachungseinheit G selbst aktiv an der Buskommunikation teilnimmt - einem Visualisierungssystem, bzw. einem Asset Management System oder einem Kommunikationsteilnehmer aus einem anderen Kommunikationssystem zur Verfügung gestellt. Die Anlagenüberwachungseinheit ist in diesem Fall zwar an den Feldbus FB angeschlossen, aber nicht als Busteilnehmer konfiguriert. Sie hört nur den Busverkehr ab und leitet Telegramme weiter.

Die Telegramme werden in der Anlagenüberwachungseinheit dahingehend überprüft, ob es sich dabei um ein Telegramm zum zyklischen Datenaustausch handelt. Falls dies erkannt wird, wird der Inhalt des Telegramms zusammen mit folgenden Informationen gespeichert.

### - Zieladresse des Telegramms und Quelladresse des Telegramms

Ist die Zieladresse die Masteradresse, werden die Daten als "Eingangsdaten des Slaves mit Quelladresse" bezeichnet, ist hingegen die Quelladresse die Masteradresse, werden die Daten als "Ausgabedaten an den Slave mit der Zieladresse" bezeichnet.

Die Speicherung kann in einem permanenten Speicher erfolgen, der sämtliche Telegramme speichert. Alternativ kann die Speicherung in einem Ringspeicher erfolgen, der eine bestimmte Menge von Daten speichert oder in einem Speicher, der mit jedem neuen Telegramm das vorhergehende Telegramm überschreibt, das die identische Quell-/Zieladresse hatte.

Die erkannten Prozessdaten werden zusammen mit der Information über Ziel-/Quelladresse einem Visualisierungssystem zur Verfügung stellt. Das Visualisierungssystem kann Teil der Anlagenüberwachungseinheit sein oder die Rechnereinheit R2. Die Daten können über ein proprietäres oder offenes Kommunikationsprotokoll an das Visualisierungssystem übertragen werden.

Die erkannten Prozessdaten können auch zusammen mit der Information über Ziel-/Quelladresse einem Asset-Management-System zur Verfügung gestellt werden.

Alternativ können die erkannten Prozessdaten zusammen mit der Information über Ziel-/Quelladresse einem Steuerungssystem zur Verfügung gestellt werden. Die erkannten Prozessdaten können nun in der Automatisierungssoftware verwendet werden, um Reaktionen des Steuerungssystems, die den Prozess beeinflussen kann, zu veranlassen.

Die erkannten Prozessdaten können auch über eine in der Anlagenüberwachungseinheit G vorgesehene Schnittstelle z. B. PROFINET I/O-Schnittstelle im Sinne eines PROFINET I/O-Device zur Verfügung stellt. Damit werden die Prozessdaten, die im PROFIBUS-DP-System erkannt worden sind, in ein PROFINET IO-System übergeben.

## Patentansprüche

1. Verfahren zur Anlagenüberwachung mit einem Feldbus (FB) der Prozessautomatisierungstechnik, über den mehrere Feldgeräte (F1, F2, F3, F4) mit einer Prozessteuereinheit (C) und einer Anlagenüberwachungseinheit (G) kommunizieren, **gekennzeichnet durch** folgende Verfahrensschritte:
a) Abhören des regelmäßigen Datenverkehrs auf dem Feldbus (FB), der zur Prozesssteuerung dient, **durch** die Anlagenüberwachungseinheit (G)
b) Prüfung der Telegramme des regelmäßigen Datenverkehrs auf Informationen, die auf ein Diagnoseereignis bei einem der Feldgeräte (F1, F2, F3, F4) hinweisen
c) Falls ein Telegramm des regelmäßigen Datenverkehrs₋mit einem Hinweis auf ein Diagnoseereignis festgestellt wird, werden von der Anlagenüberwachungseinheit (G) weitere Diagnoseinformationen von dem betreffenden Feldgerät (F1, F2, F3, F4) angefordert.

2. Verfahren nach Anspruch 1, **dadurch gekennzeichnet, dass** als Hinweis auf ein Diagnoseereignis die erhöhte Priorität eines von einem Feldgerät (F1, F2, F3, F4) gesendeten Telegramms dient.

3. Verfahren nach Anspruch 1, **dadurch gekennzeichnet, dass** als Hinweis auf ein Diagnoseereignis eine Diagnoseanforderung von der Prozesssteuereinheit (C) an das Feldgerät (F1, F2, F3, F4) dient.

4. Verfahren nach Anspruch 1, **dadurch gekennzeichnet, dass** als Anlagenüberwachungseinheit ein Gateway (G) verwendet wird, durch das der regelmäßige Datenverkehr auf dem Feldbus (FB) abgehört wird.

## Claims

1. Process for system monitoring with a fieldbus (FB) of the type used in process automation engineering via which multiple field devices (F1, F2, F3, F4) communicate with a process control unit (C) and a system monitoring unit (G), **characterized by** the following process steps:
a) Monitoring of the regular data traffic on the fieldbus (FB), which is used for process control, by the system monitoring unit (G)
b) Checking of the regular data traffic telegrams for information that indicates a diagnostic event at one of the field devices (F1, F2, F3, F4)
c) If a regular data traffic telegram is found to indicate a diagnostic event, the system monitoring unit (G) requests additional diagnostic information from the field device concerned (F1, F2, F3, F4).

2. Process as claimed in Claim 1, **characterized in that** the increased priority of a telegram sent by a field device (F1, F2, F3, F4) acts as an indicator of a diagnostic event.

3. Process as claimed in Claim 1, **characterized in that** a diagnostic request from the process control unit (C) to the field device (F1, F2, F3, F4) acts as an indicator of a diagnostic event.

4. Process as claimed in Claim 1, **characterized in that** a gateway (G) is used as a system monitoring unit via which the regular data traffic on the fieldbus (FB) is monitored.

## Revendications

1. Procédé destiné à la surveillance d'une installation comportant un bus de terrain (FB) de la technique d'automatisation des process, par l'intermédiaire duquel plusieurs appareils de terrain (F1, F2, F3, F4) communiquent avec une unité de commande de process (C) et une unité de surveillance d'installation (G), **caractérisé par** les étapes de procédé suivantes :
a) Interrogation du trafic de données régulier sur le bus de terrain (FB), qui sert à la commande du process, par l'unité de surveillance d'installation (G)
b) Contrôle des télégrammes du trafic de données régulier par rapport aux informations, qui renvoient à un événement de diagnostic pour l'un des appareils de terrain (F1, F2, F3, F4)
c) En cas de constatation d'un télégramme du trafic de données régulier avec un renvoi à un événement de diagnostic, l'unité de surveillance d'installation (G) demande des informations de diagnostic supplémentaires auprès de l'appareil de terrain (F1, F2, F3, F4) concerné.

2. Procédé selon la revendication 1, **caractérisé en ce que** sert, en tant que renvoi à un événement de diagnostic, la priorité augmentée d'un télégramme émis par un appareil de terrain (F1, F2, F3, F4).

3. Procédé selon la revendication 1, **caractérisé en ce que** sert, en tant que renvoi à un événement de diagnostic, une demande de diagnostic émise par l'unité de commande de process (C) à l'appareil de terrain (F1, F2, F3, F4).

4. Procédé selon la revendication 1, **caractérisé en ce qu'**est utilisée, en tant qu'unité de surveillance d'installation, une passerelle (G), à travers laquelle est interrogé le trafic de données régulier sur le bus de terrain (FB).
